(19) Europäisches Patentamt / European Patent Office / Office européen des brevets

(11) **EP 3 728 457 B1**

(12) **EUROPEAN PATENT SPECIFICATION**

(45) Date of publication and mention of the grant of the patent:
**18.02.2026 Bulletin 2026/08**

(21) Application number: **18837057.1**

(22) Date of filing: **21.12.2018**

(51) International Patent Classification (IPC):
***C08L 23/10*** *(2006.01)*

(52) Cooperative Patent Classification (CPC):
(C-Sets available)
**C08L 23/10;** C08L 2207/02                (Cont.)

(86) International application number:
**PCT/US2018/067230**

(87) International publication number:
**WO 2019/126719 (27.06.2019 Gazette 2019/26)**

(54) **HIGH MELT FLOW RATE COUPLED IMPACT COPOLYMER WITH HIGH MELT STRENGTH**

HOCHSCHMELZRATIGES GEKOPPELTES SCHLAGFESTES COPOLYMER MIT HOHER SCHMELZFESTIGKEIT

COPOLYMÈRE CHOC COUPLÉ À UN INDICE DE FLUIDITÉ À CHAUD ÉLEVÉ AYANT UNE RÉSISTANCE À L'ÉTAT FONDU ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2017 US 201762608900 P**

(43) Date of publication of application:
**28.10.2020 Bulletin 2020/44**

(73) Proprietor: **Braskem America, Inc.**
**Pittsburgh, Pennsylvania 15219 (US)**

(72) Inventors:
• **CARR, Joel**
**Pittsburgh, PA 15219 (US)**
• **LOHSE, Gerd**
**06258 Schkopau (DE)**
• **KRISHNASWAMY, Rajendra**
**Pittsburgh, PA 15219 (US)**
• **MILLER, William Scott**
**Pittsburgh, PA 15219 (US)**
• **MAJEWSKI, Rita**
**Pittsburgh, PA 15219 (US)**

(74) Representative: **Osha BWB**
**2, rue de la Paix**
**75002 Paris (FR)**

(56) References cited:
**WO-A2-03/082971     US-A1- 2005 070 673**

(52) Cooperative Patent Classification (CPC): (Cont.)

C-Sets
**C08L 23/10, C08L 23/16, C08K 5/28**

**Description**

BACKGROUND

Polypropylene compositions have gained wide commercial acceptance and usage in numerous applications because of the relatively low cost of the polymers and the desirable properties they exhibit. In general, polypropylene polymers, particularly propylene homopolymers, have a disadvantage of being brittle with low impact resistance, especially at low temperatures. To combat these issues, manufacturers have incorporated a dispersed copolymer phase within the polypropylene matrix to generate impact copolymers (ICPs). While impact resistance of ICPs may be improved by incorporation of dispersed copolymers phases, the dispersed phase may create other issues such as reduced melt strength, poor transparency, and poor performance in a number of applications.

SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In one aspect, embodiments of the present disclosure are directed to an impact copolymer (ICP) composition comprising a matrix polymer and a dispersed component, at least one of the matrix polymer and the dispersed component being coupled with a coupling agent, wherein the ICP composition, before coupling, has an intrinsic viscosity (IV) in the range of 4 to 10 dl/g, and, after being coupled, has a melt strength (MS) and melt flow rate (MFR) described according to the formula: $MS \geq 325 \times MFR^{-1.7}$, wherein the MS is greater than 1 cN.

In another aspect, embodiments of the present disclosure are directed to methods of producing an impact copolymer (ICP) composition, the method including coupling the ICP composition with a coupling agent, wherein the ICP composition includes a matrix polymer and a dispersed component and has an intrinsic viscosity (IV) before coupling in the range of 4 to 10 dl/g; wherein the ICP composition, after being coupled, possesses a measurable melt strength (MS) and melt flow rate (MFR) satisfying the equation: $MS \geq 325 \times MFR^{-1.7}$, wherein the MS is greater than 1 cN.

Embodiments of the ICP composition and the method are defined in the dependent claims. Other aspects and advantages of the claimed subject matter will be apparent from the following description and the appended claims.

BRIEF DESCRIPTION OF DRAWINGS

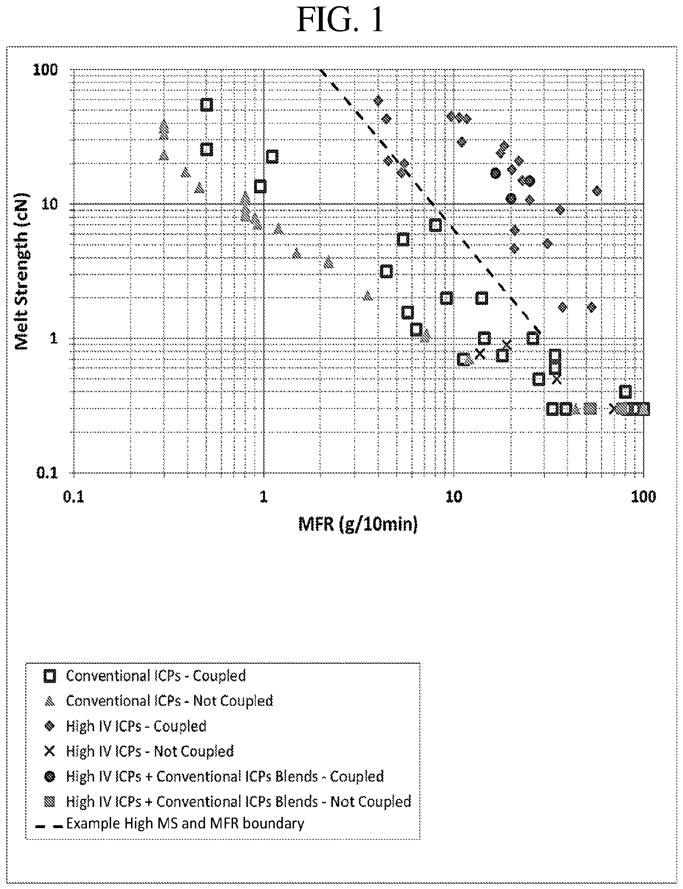

FIG. 1 is a graphical representation showing melt strength as a function of MFR for a number of compositions in accordance with embodiments of the present disclosure.

DETAILED DESCRIPTION

In one aspect, embodiments disclosed herein relate to impact copolymer (ICP) compositions having high melt flow rates (MFR) and high melt strength (MS). ICP compositions in accordance with the present disclosure may include multiphasic polymer composition having a polymer matrix and a dispersed component. In one or more embodiments, ICP compositions may exhibit melt strength and melt flow rates suitable for a number of applications including injection molding and extrusion to produce articles with excellent impact resistance and stiffness.

In one or more embodiments, properties of ICP compositions in accordance with the present disclosure may be modified to suit a particular application by adjusting a number of compositional parameters, including: (1) the molecular weight which can also be expressed as an intrinsic viscosity of a dispersed component; (2) the ratio of the concentrations of the matrix polymer and dispersed component; and (3) the concentration of the coupling agent used to couple the matrix polymer and dispersed component.

Impact copolymers (ICP) are generated by incorporating an elastomeric dispersed phase into a matrix polymer, which results in a polymer composition having modified bulk properties, including noticeable changes in impact resistance and modulus. For many polymers, however, there is often an inverse proportionality generally between MFR and MS as a function of molecular weight. For example, ICPs formulated from linear polymers such as polypropylene often have low MS at low molecular weights where the melt strength increases with increasing molecular weight. Similarly, while the MFR is correspondingly higher at lower molecular weights, the MFR decreases with increasing molecular weight.

While conventional ICP compositions may exhibit high MFR (for example, greater than 10 MFR), the corresponding MS of this conventional ICP composition is often less than 1 cN, which can introduce a number of complications in injection molding applications, extrusion applications, bubble stability in blown films, neck-in and draw resonance in cast films and extrusion coatings, foam cell strength in expanded polymer compositions, and general melt quality. MS can be described as the resistance of the polymer melt to stretching. The MS of a material is related to the molecular chain entanglements of the polymer and its resistance to untangling under strain. Properties that affect MS include molecular weight as discussed above, molecular-weight distribution (MWD), and branching within the matrix phase or dispersed phase of a polymer composition.

In one or more embodiments, polymer compositions in accordance with the present disclosure may exhibit a relatively high MS at lower molecular weights when compared to the respective matrix polymer or uncoupled ICP alone. Polymer compositions in accordance with the present disclosure may modify MFR and MS by coupling the backbone of the matrix and/or dispersed component polymers through intra-chain and inter-chain crosslinks generated by a coupling agent. Coupling creates an ICP composition polymer having higher molecular weight, higher degrees of branching over the initial linear polymer.

Melt flow rate

Melt flow rate (MFR) for ICP compositions may be tuned depending on the intended application of the final polymer. For example, in embodiments where ICP compositions will be used in an injection molding process, it may be desirable for a polymer composition having an MFR of typically from 10 g/10 min to 120 g/10 min, while compositions used in an extrusion and thermoforming process may have a MFR of from 2 g/10 min to 5 g/10 min and lower.

The MFR for polymer compositions in accordance with the present disclosure may be determined according to ASTM D1238. The MFR for the matrix polymers in accordance with the present disclosure may be in the range of 35 to 260 g/10 min prior to formulation with the dispersed component, while ICP compositions formulated with a matrix polymer and dispersed component may exhibit an MFR in the range of 15 to 120 g/10 min prior to reacting with a coupling agent. In some embodiments, polymer compositions in accordance with the present disclosure may also have an MFR characterized by other methods such as ISO 1133 and in similar corresponding MFR ranges as defined above with respect to ASTM D1238.

In one or more embodiments, ICP compositions may exhibit a MFR following reaction with a coupling agent in the range of 4 to 120 g/10min, while also having a measured MS of greater than 1.5 cN.

Melt Strength

ICP compositions in accordance with the present disclosure may exhibit favorable melt strength (MS) at high MFRs greater than 10 g/10min, where comparative formulations having similar MFR exhibit little to no MS. For example, ICP compositions in accordance with the present disclosure that are reacted with a coupling agent may provide a measurable MS at a MFR of greater than 30 g/10min, while conventional ICP compositions formulated with linear polypropylene exhibit MS values that are too low (e.g. MS < 10 cN) for most applications when the MFR is in the range of 5 to 10 g/10min.

Melt strength (MS) may be measured according to ISO 16790:2005 using a Gottfert Rheo-Tester 2000 capillary rheometer equipped with a Rheotens 71.97 setup. A 12mm capillary barrel was used at a barrel temperature of 190 °C. The molten polymer is soaked at the test temperature for 5 minutes prior to the test. A polymer strand was pushed through a 20mm/2mm L/D capillary die with a 180° entrance angle at an apparent wall shear rate of - 86 s"1. The polymer strand is then fed into the Rheotens unit and is grabbed by two sets of two wheels. The wheel speed is adjusted to reduce the acting force on the polymer strand to approximately zero. Once steady-state is achieved, the speed of the counter-rotating wheels is continuously increased, which deforms the polymer strand until fracture and/or slippage. The polymer strand resistance force to deformation is measured by the Rheotens unit. The peak force recorded during the drawing process is referred to as "melt strength".

In one or more embodiments, ICP compositions reacted with a coupling agent may exhibit a measurable MS (MS > 1cN, for example) at a MFR of greater than 20 g/10min in some embodiments. In some embodiments, polymer compositions may have a MFR greater than 20 g/10 min with a MS of greater than about 1 cN.

ICP compositions in accordance with the present disclosure may have a MS within having a lower limit selected from any of 1, 5, and 10 cN, to an upper limit selected from any of 10, 20, 25, 60, 100, 150 cN, where any lower limit may be paired with any upper limit.

In some embodiments, ICP compositions in accordance with the present disclosure may exhibit a measurable melt strength (MS) and melt flow rate (MFR) satisfying the inequality shown in Eq. 1, with the provision that the MS is greater than 1 cN.

$$\text{MS} \geq 325 \times \text{MFR}^{-1.7} \qquad (1)$$

Spiral Flow

ICP compositions in accordance with the present disclosure may be characterized by spiral flow testing in some embodiments. For linear materials, the MFR and spiral flow often correlate very well. However, for multiphase polymer compositions that have been chemically coupled, the spiral flow tends to be much longer for coupled polymer than for an equivalent uncoupled material. This occurs due to an increase in the thinning of the viscosity at higher shear rates which allows for a lower resistance to flow and subsequently a longer spiral flow length.

In one or more embodiments, polymer compositions in accordance with the present disclosure may have a spiral flow at 10 kpsi greater than 500mm.

Synthesis

ICP compositions in accordance with the present disclosure may be prepared by blending a matrix polymer with a dispersed phase or by reactor-based processes in which a matrix polymer and a dispersed component are formed in a single reactor or a series of reactors.

In one or more embodiments, ICP compositions may be prepared in at least two reactors in order to obtain polymer compositions with fractions with varying melt flow rate and/or varying comonomer content, for example, to improve processability and physical properties. In some embodiments, ICP compositions in accordance with the present disclosure may be prepared by a continuous sequential polymerization process, such as cascading sequential polymerization. For example, a process may include polymerizing a polypropylene polymer in a first reactor followed by combination with a dispersed component, followed by extrusion in the presence of a coupling agent to form polymer feedstock or polymer articles.

In one or more embodiments, coupling of the matrix polymer and/or dispersed component carried out by combining the ICP composition with a coupling agent in an extruder, and initiating the reaction using a suitable trigger such as temperature, radical initiator, and the like. In some embodiments, an extruded ICP composition may be further combined with other additives such as anti-oxidants, acid scavengers, nucleating agents, and the like, during extrusion and combination of the matrix polymer and the dispersed component.

ICP compositions may be formulated in some embodiments as a masterbatch composition that is subsequently combined with a stock polymer prior to use as a feedstock for downstream applications. In some embodiments, a masterbatch composition may be combined with a raw stock polymer, and then reacted with a coupling agent to generate the final ICP composition. In other embodiments, the masterbatch composition may be reacted with a coupling agent prior to combination with a raw stock polymer.

In one or more embodiments, a first ICP composition prepared from a matrix polymer and a dispersed component may be combined with a second ICP composition prepared from a second matrix polymer and a second dispersed component. For example, an ICP composition in accordance with the present disclosure may be blended with a second ICP composition to prepare a blend having enhanced properties, such as those defined by Eq. 1. In some embodiments, the first ICP composition and second composition may be combined in a reactor or extruder prior to a subsequent reaction with a coupling agent to couple the first ICP composition and the second ICP composition.

In one or more embodiments, ICP composition blends may be prepared by mixing a first ICP composition with a second ICP composition, wherein the dispersed component in the second ICP composition exhibits an IV of less than 4 g/dL, and/or wherein the matrix polymer of the second ICP composition exhibits an MFR determined according to ASTM D1238 in the range of 1 to 200 g/10min. In some embodiments, ICP composition blends may exhibit an MFR determined according to ASTM D1238 in the range of 1 to 100 g/10 min.

Applications

Methods in accordance with the present disclosure may include the formation of ICP compositions and the fabrication of polymer articles. ICP compositions in accordance with the present disclosure may be employed in all types of forming processing including injection molding, extrusion, extrusion coating, injection stretch blow molding, thermoforming, blow molding, rotomolding, pultrusion, compression molding, coextrusion, lamination, and the like.

Polymer compositions in accordance with the present disclosure may be used in standard thermoplastic processing methods to generate extruded articles, co-extruded articles, thermoformed articles, foams, blow-molded articles, rotomolded articles, and pultruded articles. Examples of polymer articles may include monolayer films, multilayer films, foams, packaging, rigid and flexible containers, household appliances, molded articles such as caps, bottles, cups, pouches, labels, pipes, tanks, drums, water tanks, medical devices, shelving units, and the like.

Matrix polymer

In one or more embodiments, polymer compositions may be ICPs that include at least two major component phases, including a matrix polymer that forms a substantial proportion of the final ICP polymer composition. Matrix polymers in accordance with the present disclosure include C2 to C12 homopolymers and copolymers derived from propylene monomers and one or more comonomers including C2 to C12 olefins such as ethylene, and alpha-olefins that include 1-butene, 1-pentene, 1-hexene, 1-heptene, 1-octene, 1-nonene, 1-decene, 1-undecene, 1-dodecene, and the like. In one or more embodiments, a matrix polymer may include a combination of one or more polymers or copolymers that may be blended pre- or post-polymerization in a reactor or extruder.

In one or more embodiments, the matrix polymer may have a mole percent (mol%) of propylene that ranges from a lower limit selected from 50, 55, 60, or 80 mol%, to an upper limit selected from 85, 90, 95, or 100 mol%, where any lower limit may be combined with any upper limit, and where the balance of the mol% of the matrix polymer may be contributed from one or more comonomers.

Matrix polymers in accordance with the present disclosure may contain a mole percent (mol%) of comonomer that ranges from a lower limit selected from any of 0, 0.5, 1, and 1.5 mol%, to an upper limit selected from any of 2.5, 5, 7.5, and 10 mol%, where any lower limit may be paired with any upper limit. However, more or less comonomer may be added depending on the particular application for the polymer. For example, stiffness may be improved by decreasing the amount of comonomers such as $\alpha$-olefins, while impact resistance and melt strength may be improved with increasing comonomer content.

In one or more embodiments, the matrix polymer may be included at a percent by weight (wt%) of the final polymer composition that ranges from a lower limit selected from any of 50, 60, and 70 wt%, to an upper limit selected from any of 75, 85, and 95 wt%, where any lower limit may be paired with any upper limit.

In one or more embodiments, matrix polymers may exhibit an MFR as determined according to ASTM D1238 in the range of 35 to 260 g/10 min.

Dispersed component

Polymer compositions in accordance with the present disclosure may include a dispersed component that increases the impact resistance and modifies other physical properties such as MFR, MS, flexural modulus, and the like.

In one or more embodiments, rubbers suitable for use as a rubber dispersed phase include homopolymers and copolymers having one or more monomers. In some embodiments, the dispersed component of an ICP composition may be an ethylene-propylene rubber (EPR), which may include EPRs having one or more comonomers in addition to ethylene and propylene. Other comonomers may include, for example, $\alpha$-olefins such as 1-butene, 1-pentene, 1-hexene, 1-heptene, 1-octene, 1-nonene, 1-decene, 1-undecene, 1-dodecene, and the like. In one or more embodiments, polymer compositions may include a polypropylene matrix homopolymer and a dispersed component that includes an ethylene-propylene copolymer.

In some embodiments, rubbers may include graft copolymers such as maleated ethylene-propylene copolymers, and terpolymers of ethylene and propylene with nonconjugated dienes such as 5-ethylidene-2-norbornene, 1,8 octadiene, 1,4 hexadiene cyclopentadiene (EPDM), and the like.

In one or more embodiments, the dispersed component may be included at a percent by weight (wt%) of the polymer composition that ranges from a lower limit selected from any of 5, 7, 8, 10, and 20 wt%, to an upper limit selected from any of 15, 20, 30, 40, and 50 wt%, where any lower limit may be paired with any upper limit. In some embodiments, rubber content of ICP compositions may be approximated from xylene solubles as described in ASTM D5492 - 17 followed by an acetone precipitation step.

Polymer compositions in accordance with the present disclosure may include a rubber dispersed phase containing multiple rubber polymers. In some embodiments, a second rubber may be from 10 to 60 wt% of the dispersed phase. In some embodiments, a second rubber may include 65 to 95 wt% of ethylene and 5 to 35 wt% of a second comonomer such as one or more C3-C12 $\alpha$-olefins, wherein the weight percent of ethylene in the second copolymer is greater than the weight percent of ethylene in the first copolymer.

In one or more embodiments, the dispersed component may contain a rubber having a percent by weight (wt%) of ethylene in the range of 30 to 55 wt%, and one or more comonomers such as C3-C12 $\alpha$-olefin in the range of 45 to 70 wt%. The amount of ethylene in these dispersed components can be approximated using from Fourier transform infrared spectroscopy (FTIR) measured on the XS portion.

In one or more embodiments, the intrinsic viscosity (IV) of the dispersed phase may be modified to tune the MS and MFR of the final polymer composition, for example, to modify polymer performance for applications such as injection molding. Intrinsic viscosity may be determined, for example, from the xylene soluble fraction of rubber obtained from an ICP composition using a glass viscometer, measured in tetrahydronaphthalene solvent at 135 °C. In some embodiments, the IV for the dispersed component may be in the range of 4 to 10 dl/g.

Coupling Agent

In one or more embodiments, ICP compositions may be reacted to form covalent intra- and inter-strand bonds between polymer chains in the matrix phase polymer and/or the dispersed component. Coupling agents in accordance with the present disclosure include chemical compounds that contain at least two reactive groups that are capable of forming bonds with the backbone or sidechains of the constituent polymers in the ICP composition.

In one or more embodiments, the coupling agent may be one or more polysulfonyl azides having the general formula of X-R-X wherein each X is $SO_2N_3$ and R is a carbon chain that may be saturated or unsaturated, cyclic or acyclic, aromatic or non-aromatic, and may contain one or more heteroatoms including oxygen, nitrogen, sulfur, or silicon, and one or more additional X groups. Suitable coupling agents may include an R that is aryl, alkyl, aryl alkaryl, arylalkyl silane, siloxane or heterocyclic, groups and other groups which are inert and separate the sulfonyl azide groups as described. In some embodiments, R may include at one or more aryl groups between the sulfonyl groups, such as when R is 4,4' diphenylether or 4,4'-biphenyl.

Polysulfonyl azides may include 4,4'-oxydibenzenesulfonyl azide, naphthalene bis(sulfonyl azides), 1,5-pentane bis(sulfonyl azide), 1,8-octane bis(sulfonyl azide), 1,10-decane bis(sulfonyl azide), 1,10-octadecane bis(sulfonyl azide), 1-octyl-2,4,6-benzene tris(sulfonyl azide), 4,4'-bis(benzenesulfonyl azide), 1,6-bis(4'-sulfonazidophenyl)hexane, 2,7-naphthalene bis(sulfonyl azide), and mixed sulfonyl azides of chlorinated aliphatic hydrocarbons containing an average of from 1 to 8 chlorine atoms and from about 2 to 5 sulfonyl azide groups per molecule, and mixtures thereof. Preferred poly(sulfonyl azide)s include oxy-bis(4-sulfonylazidobenzene), 2,7-naphthalene bis(sulfonyl azido), 4,4'-bis(sulfonyl azido)biphenyl, 4,4'-oxybis(benzenesulfonyl azide) and bis(4-sulfonyl azidophenyl)methane, and mixtures thereof.

In some embodiments, coupling agents may include diazo alkanes, phosphazene azides, sulfonyl azides, formyl azides, azides, geminally-substituted methylene groups, metallocarbenes, and the like.

In one or more embodiments, coupling agents may be included at a concentration of the ICP composition that ranges from a lower limit selected from any of 50, 100, 200, 500 ppm, and 1,000 ppm, to an upper limit selected from any of 1,000, 2,000, 3,000 and 4,000 ppm, where any lower limit may be paired with any upper limit.

Additives

A number of additives may be incorporated into ICP compositions in accordance with the present disclosure that may include for example, stabilizers, antioxidants (for example hindered phenols such as Irganox™ 1010 from the BASF Corporation), phosphites (for example Irgafos™ 168 from the BASF Corporation), cling additives (for example polyisobutylene), polymeric processing aids (such as Dynamar™ 5911 from 3M Corporation or Silquest™ PA-1 from Momentive Performance Materials), fillers, colorants, clarifiers (for example, Millad 3988i and Millad NX8000 from Milliken & Co.); antiblock agents, acid scavengers, waxes, antimicrobials, UV stabilizers, nucleating agents (for example NA-11 from Amfine Corporation), optical brighteners and antistatic agents.

In one or more embodiments, polymer compositions may include one or more fillers. Fillers in accordance with the present embodiments may include carbon black, silicic acid powder, precipitated calcium carbonate, calcium carbonate, talc, titanium dioxide and clay. In one or more embodiments, one or more fillers may be included at a concentration of the ICP composition that ranges from a lower limit selected from any of 20, 30, 40, and 50 ppm, to an upper limit selected from any of 50, 100, 150, and 200 ppm, where any lower limit may be paired with any upper limit. However, while possible filler concentrations have been provided, it is envisioned that more or less filler (or fillers) may be used depending on the application.

In one or more embodiments, polymer compositions may be formulated as a medium density foam using a physical or chemical blowing agent. Physical blowing agents may include volatile organic solvents such as chlorofluorocarbons, and gases such as nitrogen, carbon dioxide, carbon monoxide, and the like. Chemical blowing agents in accordance with the present disclosure may include reagents that generate gaseous byproducts during curing of a polymerizable material may also be used. In one or more embodiments, suitable chemical blowing agents may include hydrazine, hydrazides, nitrates, azo compounds such as azodicarbonamide, cyanovaleric acid, and other nitrogen-based materials, sodium bicarbonate, and other compounds known in the art.

Examples

A number of sample and comparative formulations were prepared and tested to study the properties of ICPs in accordance with the present disclosure. With particular respect to FIG. 1, selected compositions are plotted as a function of their respective MS and MFR. Compositions studied include conventional ICP polymers, coupled and uncoupled; high IV ICPs in accordance with the present disclosure, coupled and uncoupled; high IV ICPs and conventional ICP blends, coupled and uncoupled. Coupled samples were prepared by extrusion blending of the ICP components with a molecular melt (MM) of coupling agent 4,4'-Oxydibenzenesulfonyl azide (DPO-BSA).

It is noted generally that, when coupling conventional high MFR ICPs, there is an improvement in properties; however, there was not any increase in the MS at a MFR > 20 g/10min. However, for high IV ICP formulations in accordance with the present disclosure, it was found that coupled compositions exhibited a measurable MS at MFR > 10 g/10min.

EP 3 728 457 B1

Individual sample formulations and results are shown in Tables 1-8, where Tables 1-2 present data for conventional uncoupled ICP formulations; Tables 3-4 present data for conventional ICP formulations coupled with DPO-BSA; Tables 5-6 present data for uncoupled high IV ICP formulations in accordance with the present disclosure; Tables 7-8 present data for coupled high IV ICP formulations in accordance with the present disclosure; Tables 9-10 present data for uncoupled high IV ICPs and conventional ICP blends; and Tables 11-12 present data for coupled high IV ICPs and conventional ICP blends.

| Table 1: Conventional uncoupled ICP formulations | | | | | | |
|---|---|---|---|---|---|---|
| Sample | MFR of base grade before coupling (g/10 min) | Amount of Rubber in base grade ICP (wt%) | Rubber composition in base grade ICP (wt% ethylene) | Matrix MFR of base grade ICP (g/10 min) | IV of rubber in base material (dL/g) | DPO-BSA MM (ppm) |
| 1 | 12 | 15 | 45 | 22 | 2.9 | 0 |
| 2 | 7 | 20 | 50 | 15 | 3.3 | 0 |
| 3 | 100 | - | - | - | - | - |
| 4 | 44 | - | - | - | - | - |
| 5 | 0.9 | 18 | 50 | 1.5 | 2.5 | - |
| 6 | 0.9 | 18 | 50 | 1.5 | 2.5 | - |
| 7 | 1.2 | 20 | 45 | 2 | 3.3 | - |
| 8 | 1.5 | 18.5 | 50 | 2.2 | 2.5 | - |
| 9 | 2.2 | 12 | 50 | 2.5 | 1.9 | - |
| 10 | 7.2 | 14.5 | 50 | 11.5 | 2.8 | - |
| 11 | 0.39 | 14 | 36 | 0.35 | 2.5 | - |
| 12 | 0.3 | 14 | 36 | 0.35 | 2.5 | - |
| 13 | 0.8 | 20 | 42 | 0.7 | 2 | - |
| 14 | 0.8 | 20 | 42 | 0.7 | 2 | - |
| 15 | 0.8 | 20 | 42 | 0.7 | 2 | - |
| 16 | 3.5 | 18 | 42 | 4.5 | 2 | - |
| 17 | 0.3 | 15 | 53 | 0.35 | 3 | - |
| 18 | 0.3 | 15 | 53 | 0.35 | 3 | - |
| 19 | 0.3 | 15 | 53 | 0.35 | 3 | - |
| 20 | 0.46 | 14 | 40 | 0.5 | 2.5 | - |
| 21 | 0.93 | 21 | 33 | 0.65 | 2.2 | - |
| 22 | 0.8 | 20 | 42 | 0.7 | 2 | - |
| 23 | 0.8 | 20 | 42 | 0.7 | 2 | - |
| 24 | 0.8 | 20 | 42 | 0.7 | 2 | - |
| 25 | 0.8 | 20 | 42 | 0.7 | 2 | - |
| 26 | 2.2 | 12 | 50 | 2.5 | 1.9 | - |

| Table 2: Physical properties studied for conventional uncoupled ICP formulations | | | |
|---|---|---|---|
| Sample | MFR after coupling (g/10 min) | MS (cN) | spiral flow (cm) |
| 1 | - | 0.7 | 672 |
| 2 | - | 1.02 | |
| 3 | - | 0.3 | 1140 |

8

(continued)

| Table 2: Physical properties studied for conventional uncoupled ICP formulations | | | |
|---|---|---|---|
| Sample | MFR after coupling (g/10 min) | MS (cN) | spiral flow (cm) |
| 4 | - | 0.3 | 904 |
| 5 | - | 8.01 | - |
| 6 | - | 7.88 | - |
| 7 | - | 6.65 | - |
| 8 | - | 4.34 | - |
| 9 | - | 3.81 | - |
| 10 | - | 1.08 | - |
| 11 | - | 17.43 | - |
| 12 | - | 23.3 | - |
| 13 | - | 8.7 | - |
| 14 | - | 8.4 | - |
| 15 | - | 8.2 | - |
| 16 | - | 2.1 | - |
| 17 | - | 33 | - |
| 18 | - | 39.6 | - |
| 19 | - | 37 | - |
| 20 | - | 13.3 | - |
| 21 | - | 7.1 | - |
| 22 | - | 10.8 | - |
| 23 | - | 11.3 | - |
| 24 | - | 11.5 | - |
| 25 | - | 9.4 | - |
| 26 | - | 3.65 | - |

| Table 3: Conventional coupled ICP formulations | | | | | | |
|---|---|---|---|---|---|---|
| Sample | MFR of base grade before coupling (g/10 min) | Amount of Rubber in base grade ICP (wt%) | Rubber compositio n in base grade ICP (wt% ethylene) | Matrix MFR of base grade ICP (g/10 min) | IV of rubber in base material (dL/g) | DPO-BSA MM (wt% ) |
| 27 | 12 | 15 | 45 | 22 | 2.9 | 500 |
| 28 | 7 | 20 | 50 | 15 | 3.3 | 500 |
| 29 | 7 | 20 | 50 | 15 | 3.3 | 1000 |
| 30 | 1.2 | 20 | 45 | 2 | 3.3 | 1000 |
| 31 | 12 | 15 | 45 | 22 | 2.9 | 1500 |
| 32 | 7 | 20 | 50 | 15 | 3.3 | 1500 |
| 33 | 12 | 15 | 45 | 22 | 2.9 | 3000 |
| 34 | 1.2 | 20 | 45 | 2 | 3.3 | 1000 |
| 35 | 1.6 | 15 | 57 | 2.5 | 2 | 1000 |
| 36 | 100 | 13 | 45 | 150 | 1.8 | 2000 |

(continued)

| Table 3: Conventional coupled ICP formulations | | | | | | |
|---|---|---|---|---|---|---|
| Sample | MFR of base grade before coupling (g/10 min) | Amount of Rubber in base grade ICP (wt%) | Rubber compositio n in base grade ICP (wt% ethylene) | Matrix MFR of base grade ICP (g/10 min) | IV of rubber in base material (dL/g) | DPO-BSA MM (wt% ) |
| 37 | 44 | 15 | 45 | 85 | 1.9 | 3000 |
| 38 | 1.6 | 15 | 57 | 2.5 | 2 | 1325 |
| 39 | 125 | 9 | 31 | 200 | 3.2 | 2000 |

| Table 4: Physical properties studied for conventional coupled ICP formulations | | | |
|---|---|---|---|
| Sample | MFR after coupling (g/10 min) | melt strength (cN) | spiral flow (cm) |
| 27 | 11.2 | 0.7 | 660 |
| 28 | 6.3 | 1.17 | - |
| 29 | 5.7 | 1.56 | - |
| 30 | 1.11 | 22.7 | - |
| 31 | 9.1 | 2 | 622 |
| 32 | 4.4 | 3.19 | - |
| 33 | 5.4 | 5.5 | 600 |
| 34 | 0.96 | 13.6 | - |
| 35 | 0.5 | 55 | - |
| 36 | 80 | 0.4 | 1100 |
| 37 | 34 | 0.6 | - |
| 38 | 0.5 | 25.6 | - |
| 39 | 90 | 0.3 | - |

| Table 5: Uncoupled high IV ICP formulations | | | | | | |
|---|---|---|---|---|---|---|
| Sample | MFR of base grade before coupling (g/10 min) | Amount of Rubber in base grade ICP (wt%) | Rubber composition in base grade ICP (wt% ethylene) | Matrix MFR of base grade ICP (g/10 min) | IV of rubber in base material (dL/g) | DPO-BSA MM (ppm) |
| 40 | 35 | 8 | 35 | 70 | 6.2 | 0 |
| 41 | 19 | 8 | 35 | 70 | 6.2 | 0 |
| 42 | 110 | 8 | 37 | 260 | 6.5 | 0 |
| 43 | 70 | 13 | 40 | 260 | 7.2 | 0 |
| 44 | 14 | 8 | 35 | 35 | 6 | 0 |

| Table 6: Physical properties studied for uncoupled high IV formulations | | | |
|---|---|---|---|
| Sample | MFR after coupling (g/10 min) | melt strength (cN) | spiral flow (cm) |
| 40 | - | 0.5 | - |
| 41 | - | 0.9 | - |
| 42 | - | 0.3 | 1130 |

(continued)

| Table 6: Physical properties studied for uncoupled high IV formulations | | | |
|---|---|---|---|
| Sample | MFR after coupling (g/10 min) | melt strength (cN) | spiral flow (cm) |
| 43 | - | 0.3 | 1010 |
| 44 | - | 0.8 | - |

| Table 7: Coupled high IV ICP formulations | | | | | | |
|---|---|---|---|---|---|---|
| Sample | MFR of base grade before coupling (g/10 min) | Amount of Rubber in base grade ICP (wt%) | Rubber composition in base grade ICP (wt% ethylene) | Matrix MFR of base grade ICP (g/10 min) | IV of rubber in base material (dL/g) | DPO-BSA MM (ppm) |
| 45 | 65 | 13 | 40 | 260 | 7.2 | 1000 |
| 46 | 35 | 8 | 35 | 70 | 6.2 | 2500 |
| 47 | 35 | 8 | 35 | 70 | 6.2 | 5000 |
| 48 | 115 | 8 | 35 | 260 | 6.5 | 3500 |
| 49 | 65 | 13 | 40 | 260 | 7.2 | 2000 |
| 50 | 65 | 13 | 40 | 260 | 7.2 | 1000 |
| 51 | 115 | 8 | 37 | 260 | 6.5 | 2000 |
| 52 | 35 | 8 | 35 | 70 | 6.2 | 1000 |
| 53 | 115 | 8 | 37 | 260 | 6.5 | 1000 |
| 54 | 115 | 8 | 37 | 260 | 6.5 | 2000 |
| 55 | 15 | 8 | 35 | 35 | 6 | 1000 |
| 56 | 15 | 8 | 35 | 35 | 6 | 2000 |
| 57 | 15 | 8 | 35 | 35 | 6 | 2000 |
| 58 | 35 | 8 | 36 | 70 | 6.3 | 1500 |
| 59 | 35 | 8 | 36 | 70 | 6.3 | 2000 |
| 60 | 35 | 8 | 36 | 70 | 6.3 | 2500 |
| 61 | 35 | 8 | 36 | 70 | 6.3 | 2000 |
| 62 | 35 | 8 | 36 | 70 | 6.3 | 2000 |
| 63 | 35 | 8 | 36 | 70 | 6.3 | 500 |
| 64 | 35 | 8 | 36 | 70 | 6.3 | 1000 |
| 65 | 35 | 8 | 36 | 70 | 6.3 | 2500 |

| Table 8: Physical properties studied for uncoupled high IV formulations | | | |
|---|---|---|---|
| Sample | MFR after coupling (g/10 min) | melt strength (cN) | spiral flow (cm) |
| 45 | 20.87 | 4.7 | - |
| 46 | 21 | 6.4 | - |
| 47 | 11 | 29 | - |
| 48 | 22 | 21 | - |
| 49 | 25 | 10.7 | 1001 |
| 50 | 31 | 5.1 | 1000 |
| 51 | 36.3 | 9.1 | 1079 |

(continued)

| Table 8: Physical properties studied for uncoupled high IV formulations | | | |
|---|---|---|---|
| Sample | MFR after coupling (g/10 min) | melt strength (cN) | spiral flow (cm) |
| 52 | 37.6 | 1.7 | - |
| 53 | 53.3 | 1.7 | 1117 |
| 54 | 57 | 12.5 | - |
| 55 | 5.5 | 20 | - |
| 56 | 4.5 | 21 | - |
| 57 | 5.3 | 17 | - |
| 58 | 17.7 | 24 | - |
| 59 | 11.7 | 43 | - |
| 60 | 9.7 | 45 | - |
| 61 | 10.7 | 44 | - |
| 62 | 4.4 | 43 | - |
| 63 | 20.2 | 18 | - |
| 64 | 18.4 | 27 | - |
| 65 | 4 | 59 | - |

| Table 9: Uncoupled high IV ICPs and conventional ICP blends | | | | | | |
|---|---|---|---|---|---|---|
| Sample | MFR of base grade before coupling (g/10 min), ICP1/ICP2 | Amount of Rubber in base grade ICP (wt%), ICP1/ICP2 | Rubber composition in base grade ICP (wt% ethylene), ICP1/ICP2 | Matrix MFR of base grade ICP (g/10 min), ICP1/ICP2 | IV of rubber in base material (dL/g), ICP1/ICP2 | DPO-BSA MM (ppm) |
| 66 | 115/30 | 8/30 | 37/32 | 260/150 | 6.5/2.3 | - |
| 67 | 115/30 | 8/30 | 37/32 | 260/150 | 6.5/2.3 | - |
| 68 | 60/30 | 8/30 | 36/32 | 125/150 | 6.5/2.3 | - |

| Table 10: Physical properties studied for uncoupled high IV ICPs and conventional ICP blends | | | |
|---|---|---|---|
| Sample | MFR after coupling (g/10 min) | melt strength (cN) | spiral flow (cm) |
| 66 | 77 | 0.3 | - |
| 67 | 52 | 0.3 | - |
| 68 | 53 | 0.3 | - |

| Table 11: Coupled high IV ICPs and conventional ICP blends | | | | | | |
|---|---|---|---|---|---|---|
| Sample | MFR of base grade before coupling (g/10 min), ICP1/ICP2 | Amount of Rubber in base grade ICP (wt%), ICP1/ICP2 | Rubber composition in base grade ICP (wt% ethylene), ICP1/ICP2 | Matrix MFR of base grade ICP (g/10 min), ICP1/ICP2 | IV of rubber in base material (dL/g), ICP1/ICP2 | DPO-BSA MM (ppm) |
| 69 | 115/30 | 8/30 | 37/32 | 260/150 | 6.5/2.3 | 2000 |
| 70 | 115/30 | 8/30 | 37/32 | 260/150 | 6.5/2.3 | 2000 |
| 71 | 60/30 | 8/30 | 36/32 | 125/150 | 6.5/2.3 | 2000 |

| Table 12: Physical properties studied for coupled high IV ICPs and conventional ICP blends | | | |
|---|---|---|---|
| Sample | MFR after coupling (g/10 min) | melt strength (cN) | spiral flow (cm) |
| 69 | 25 | 15 | - |
| 70 | 20 | 11 | - |
| 71 | 16.5 | 17 | - |

## Claims

1. An impact copolymer (ICP) composition comprising a matrix polymer and a dispersed component, at least one of the matrix polymer and the dispersed component being coupled with a coupling agent, wherein the ICP composition, before coupling, has an intrinsic viscosity (IV) in the range of 4 to 10 dl/g, and, after being coupled, has a melt strength (MS) and melt flow rate (MFR) described according to the formula:

$$MS \geq 325 \times MFR^{-1.7}$$

wherein the MS is greater than 1 cN.

2. The ICP composition of claim 1, wherein the ICP composition has a MS in the range of 1 to 150 cN.

3. The ICP composition of claim 1 or claim 2, wherein the dispersed component comprises a copolymer prepared from ethylene and a C3 to C12 comonomer.

4. The ICP composition of claim 3, wherein the coupling agent is a polysulfonyl azide.

5. The ICP composition of claim 3 or claim 4, wherein the dispersed component comprises a polymer prepared from ethylene and propylene comonomer.

6. The ICP composition of any of claims 3 to 5, wherein the MFR of the ICP composition, prior to being coupled, is in the range of 15 to 120 g/10min.

7. The ICP composition of any of claims 3 to 6, wherein the dispersed component has an intrinsic viscosity in the range of 4 to 10 dl/g.

8. The ICP composition of any of claims 3 to 7, wherein the dispersed component has an ethylene content of 30 to 45 wt%.

9. The ICP composition of any of the above claims, wherein the dispersed component is 7 to 30 wt% of the ICP composition.

10. The ICP composition of any of the above claims, further comprising a filler.

11. An article formed using the ICP composition of any of claims 1 to 10.

12. The article of claim 11, wherein the article is a monolayer film, multilayer film, packaging, cap, injection molded article, extruded article, co-extruded article, thermoformed article, foam, blow-molded article, rotomolded article, or pultruded article.

13. A method of producing an impact copolymer (ICP) composition, the method comprising:

coupling the ICP composition with a coupling agent, wherein the ICP composition comprises a matrix polymer and a dispersed component and has an intrinsic viscosity (IV) before coupling in the range of 4 to 10 dl/g; wherein the ICP composition, after being coupled, possesses a measurable melt strength (MS) and melt flow rate (MFR) satisfying the following equation:

$$MS \geq 325 \times MFR^{-1.7}$$

wherein the MS is greater than 1 cN.

**14.** The method of claim 13, wherein the matrix component is a polypropylene homopolymer, and wherein the dispersed component is an ethylene-propylene copolymer.

**15.** The method of claim 14, wherein the ICP composition is produced in-reactor by sequential polymerization.

**16.** The method of any of claims 13 to 15, wherein the ICP composition is any of claims 1 to 10.

**17.** The method of any of claims 13 to 16, wherein the matrix polymer has a MFR in the range of 35 to 260 g/10min.

**18.** The method of any of claims 13 to 17, wherein the coupling agent is 4,4'-oxydibenzenesulfonyl azide.

**19.** The method of any of claims 13 to 18, wherein the coupling agent is added to the ICP composition at concentration ranging from 1,000 to 4,000 ppm.

**20.** The method of any of claims 13 to 19, further comprising: injection molding the ICP composition.

**21.** The method of any of claims 13 to 20, wherein coupling the ICP composition dispersed component with a coupling agent is carried out in an extruder.

**22.** The method of any of claims 13 to 21, further comprising combining the ICP composition with a second ICP composition prior to coupling.

**23.** The method of claim 22, wherein the second ICP composition comprises a second matrix polymer comprising a homopolymer or copolymer, and a second dispersed component comprising a copolymer of ethylene and a C3 to C12 comonomer.

**24.** The method of claim 23, wherein the second dispersed component is 30 to 55wt% ethylene.

**25.** The method of claim 23 or claim 24, wherein the second dispersed component exhibits an IV of less than 4 g/dL.

**26.** The method of any of claims 23 to 25, wherein the second matrix polymer exhibits an MFR in the range of 1 to 200 g/10min.

**27.** The method of any of claims 22 to 26, wherein the MFR of the combined ICP composition and second ICP composition is in the range of 1 to 100 g/10 min.

**Patentansprüche**

**1.** Schlagzähe Copolymerzusammensetzung (ICP-Zusammensetzung) umfassend ein Matrixpolymer und eine dispergierte Komponente, wobei wenigstens eines von dem Matrixpolymer und der dispergierten Komponente mit einem Kopplungsmittel gekoppelt ist, wobei die ICP-Zusammensetzung vor Koppeln eine intrinsische Viskosität (IV) in dem Bereich von 4 bis 10 dl/g aufweist und nach Koppeln eine Schmelzefestigkeit (MS) und eine Schmelzflussrate (MFR) wie beschrieben gemäß der Formel aufweist:

$$MS \geq 325 \times MFR^{-1,7}$$

wobei die MS größer als 1 cN ist.

**2.** ICP-Zusammensetzung nach Anspruch 1, wobei die ICP-Zusammensetzung eine MS in dem Bereich von 1 bis 150 cN aufweist.

**3.** ICP-Zusammensetzung nach Anspruch 1 oder Anspruch 2, wobei die dispergierte Komponente ein Copolymer umfasst, das aus Ethylen und einem C3- bis C12-Comonomer hergestellt ist.

4. ICP-Zusammensetzung nach Anspruch 3, wobei das Kopplungsmittel ein Polysulfonylazid ist.

5. ICP-Zusammensetzung nach Anspruch 3 oder Anspruch 4, wobei die dispergierte Komponente ein Polymer umfasst, das aus Ethylen und Propylen-Comonomer hergestellt ist.

6. ICP-Zusammensetzung nach einem der Ansprüche 3 bis 5, wobei die MFR der ICP-Zusammensetzung vor Koppeln in dem Bereich von 15 bis 120 g/10 min liegt.

7. ICP-Zusammensetzung nach einem der Ansprüche 3 bis 6, wobei die dispergierte Komponente eine intrinsische Viskosität in dem Bereich von 4 bis 10 dl/g aufweist.

8. ICP-Zusammensetzung nach einem der Ansprüche 3 bis 7, wobei die dispergierte Komponente einen Ethylengehalt von 30 bis 45 Gew.-% aufweist.

9. ICP-Zusammensetzung nach einem der vorstehenden Ansprüche, wobei die dispergierte Komponente 7 bis 30 Gew.-% der ICP-Komponente ausmacht.

10. ICP-Zusammensetzung nach einem der vorstehenden Ansprüche, ferner umfassend einen Füllstoff.

11. Gegenstand, gebildet unter Verwendung der ICP-Zusammensetzung nach einem der Ansprüche 1 bis 10.

12. Gegenstand nach Anspruch 11, wobei der Gegenstand ein(e) einschichtige Folie, mehrschichtige Folie, Verpackung, Kappe, spritzgegossener Gegenstand, extrudierter Gegenstand, coextrudierter Gegenstand, warmgeformter Gegenstand, Schaumstoff, blasgeformter Gegenstand, rotogeformter Gegenstand oder pultrudierter Gegenstand ist.

13. Verfahren zur Herstellung einer schlagzähen Copolymerzusammensetzung (ICP-Zusammensetzung), wobei das Verfahren umfasst:

Koppeln der ICP-Zusammensetzung mit einem Kopplungsmittel, wobei die ICP-Zusammensetzung ein Matrixpolymer und eine dispergierte Komponente umfasst und eine intrinsische Viskosität (IV) vor Koppeln in dem Bereich von 4 bis 10 dl/g aufweist und wobei die ICP-Zusammensetzung nach Koppeln eine messbare Schmelzefestigkeit (MS) und eine Schmelzflussrate (MFR) aufweist, die der folgenden Gleichung entsprechen:

$$MS \geqslant 325 \times MFR^{-1,7}$$

wobei die MS größer als 1 cN ist.

14. Verfahren nach Anspruch 13, wobei die Matrixkomponente ein Polypropylen-Homopolymer ist und wobei die dispergierte Komponente ein Ethylen-Propylen-Copolymer ist.

15. Verfahren nach Anspruch 14, wobei die ICP-Zusammensetzung im Reaktor durch sequenzielle Polymerisation hergestellt wird.

16. Verfahren nach einem der Ansprüche 13 bis 15, wobei die ICP-Zusammensetzung eine beliebige nach Ansprüchen 1 bis 10 ist.

17. Verfahren nach einem der Ansprüche 13 bis 16, wobei das Matrixpolymer eine MFR in dem Bereich von 35 bis 260 g/10 min aufweist.

18. Verfahren nach einem der Ansprüche 13 bis 17, wobei das Kopplungsmittel 4,4'-Oxydibenzolsulfonylazid ist.

19. Verfahren nach einem der Ansprüche 13 bis 18, wobei das Kopplungsmittel in einer Konzentration in dem Bereich von 1.000 bis 4.000 ppm zu der ICP-Zusammensetzung zugegeben wird.

20. Verfahren nach einem der Ansprüche 13 bis 19, ferner umfassend: Spritzgießen der ICP-Zusammensetzung.

21. Verfahren nach einem der Ansprüche 13 bis 20, wobei Koppeln der dispergierten Komponente der ICP-Zusammensetzung mit einem Kopplungsmittel in einem Extruder durchgeführt wird.

22. Verfahren nach einem der Ansprüche 13 bis 21, ferner umfassend Kombinieren der ICP-Zusammensetzung mit einer zweiten ICP-Zusammensetzung vor Koppeln.

23. Verfahren nach Anspruch 22, wobei die zweite ICP-Zusammensetzung ein zweites Matrixpolymer, das ein Homopolymer oder Copolymer umfasst, und eine zweite dispergierte Komponente, die ein Copolymer von Ethylen und einem C3- bis C12-Monomer umfasst, umfasst.

24. Verfahren nach Anspruch 23, wobei die zweite dispergierte Komponente 30 bis 55 Gew.-% Ethylen ist.

25. Verfahren nach Anspruch 23 oder Anspruch 24, wobei die zweite dispergierte Komponente eine IV von weniger als 4 g/dl zeigt.

26. Verfahren nach einem der Ansprüche 23 bis 25, wobei das zweite Matrixpolymer eine MFR in dem Bereich von 1 bis 200 g/10 min zeigt.

27. Verfahren nach einem der Ansprüche 22 bis 26, wobei die MFR der kombinierten ICP-Zusammensetzung und zweiten ICP-Zusammensetzung in dem Bereich von 1 bis 100 g/10 min liegt.


**Revendications**

1. Une composition de copolymère d'impact (ICP) comprenant une matrice polymère et un composant dispersé, au moins l'un de la matrice polymère et du composant dispersé étant couplé à un agent de couplage, dans laquelle la composition ICP, avant couplage, présente une viscosité intrinsèque (IV) comprise entre 4 et 10 dl/g, et, après couplage, présente une résistance à l'état fondu (MS) et un taux d'écoulement à l'état fondu (MFR) décrits conformément à la formule :

$$MS \geq 325 \times MFR^{-1.7}$$

dans laquelle la MS est supérieure à 1 cN.

2. La composition ICP selon la revendication 1, dans laquelle la composition ICP présente une MS comprise entre 1 et 150 cN.

3. La composition ICP selon la revendication 1 ou de la revendication 2, dans laquelle le composant dispersé comprend un copolymère préparé à partir d'éthylène et d'un comonomère C3 à C12.

4. La composition ICP selon la revendication 3, dans laquelle l'agent de couplage est un azide de polysulfonyle.

5. La composition ICP selon la revendication 3 ou de la revendication 4, dans laquelle le composant dispersé comprend un polymère préparé à partir d'éthylène et d'un comonomère de propylène.

6. La composition ICP selon l'une quelconque des revendications 3 à 5, dans laquelle le MFR de la composition ICP, avant d'être couplée, est compris entre 15 et 120 g/10 min.

7. La composition ICP selon l'une quelconque des revendications 3 à 6, dans laquelle le composant dispersé présente une viscosité intrinsèque comprise entre 4 et 10 dl/g.

8. La composition ICP selon l'une quelconque des revendications 3 à 7, dans laquelle le composant dispersé a une teneur en éthylène de 30 à 45 % en poids.

9. La composition ICP selon l'une quelconque des revendications ci-dessus, dans laquelle le composant dispersé représente 7 à 30 % en poids de la composition ICP.

**10.** La composition ICP selon l'une quelconque des revendications ci-dessus, comprenant en outre un matériau de remplissage.

**11.** Un article formé à l'aide de la composition ICP selon l'une quelconque des revendications 1 à 10.

**12.** L'article selon la revendication 11, dans lequel l'article est un film monocouche, un film multicouche, un emballage, un bouchon, un article moulé par injection, un article extrudé, un article coextrudé, un article thermoformé, une mousse, un article moulé par soufflage, un article rotomoulé ou un article pultrudé.

**13.** Un procédé de production d'une composition de copolymère d'impact (ICP), le procédé consistant à :

coupler la composition ICP avec un agent de couplage, la composition ICP comprenant une matrice polymère et un composant dispersé et présentant une viscosité intrinsèque (IV) avant couplage dans la plage de 4 à 10 dl/g ; après couplage, la composition ICP présentant une résistance à l'état fondu (MS) mesurable et un taux d'écoulement à l'état fondu (MFR) satisfaisant l'équation suivante :

$$MS \geq 325 \times MFR^{-1.7}$$

dans laquelle la MS est supérieure à 1 cN.

**14.** Le procédé selon la revendication 13, dans lequel le composant matrice est un homopolymère de polypropylène, et dans lequel le composant dispersé est un copolymère éthylène-propylène.

**15.** Le procédé selon la revendication 14, dans lequel la composition ICP est produite en réacteur par polymérisation séquentielle.

**16.** Le procédé selon l'une quelconque des revendications 13 à 15, dans lequel la composition ICP correspond à l'une quelconque des revendications 1 à 10.

**17.** Le procédé selon l'une quelconque des revendications 13 à 16, dans lequel la matrice polymère a un MFR compris entre 35 et 260 g/10 min.

**18.** Le procédé selon l'une quelconque des revendications 13 à 17, dans lequel l'agent de couplage est le 4,4'-oxydibenzènesulfonyl azide.

**19.** Le procédé selon l'une quelconque des revendications 13 à 18, dans lequel l'agent de couplage est ajouté à la composition ICP à une concentration comprise entre 1 000 et 4 000 ppm.

**20.** Le procédé selon l'une quelconque des revendications 13 à 19, comprenant en outre : le moulage par injection de la composition ICP.

**21.** Le procédé selon l'une quelconque des revendications 13 à 20, dans lequel le couplage du composant dispersé de la composition ICP avec un agent de couplage est effectué dans une extrudeuse.

**22.** Le procédé selon l'une quelconque des revendications 13 à 21, comprenant en outre la combinaison de la composition de copolymère d'impact (ICP) avec une deuxième composition de copolymère d'impact (ICP) avant le couplage.

**23.** Le procédé selon la revendication 22, dans lequel la deuxième composition de copolymère d'impact (ICP) comprend une deuxième matrice polymère comprenant un homopolymère ou un copolymère, et un deuxième composant dispersé comprenant un copolymère d'éthylène et d'un comonomère C3 à C12.

**24.** Le procédé selon la revendication 23, dans lequel le deuxième composant dispersé contient 30 à 55 % en poids d'éthylène.

**25.** Le procédé selon la revendication 23 ou la revendication 24, dans lequel le deuxième composant dispersé présente une viscosité intrinsèque (IV) inférieure à 4 dl/g.

26. Le procédé selon l'une quelconque des revendications 23 à 25, dans lequel la deuxième matrice polymère présente un MFR compris entre 1 et 200 g/10 min.

27. Le procédé selon l'une quelconque des revendications 22 à 26, dans lequel le MFR de la composition de copolymère d'impact (ICP) combinée et de la deuxième composition de copolymère d'impact (ICP) est compris entre 1 et 100 g/10 min.

# FIG. 1